# EUROPÄISCHE PATENTSCHRIFT

(11) **EP 1 226 666 B1**
(45) Veröffentlichungstag und Bekanntmachung des Hinweises auf die Patenterteilung: **15.10.2003**
(21) Anmeldenummer: 00987055.1
(22) Anmeldetag: 31.10.2000
(51) Int. Cl.: H04B 7/26

(54) **VERFAHREN ZUR SYNCHRONISATION EINER SIGNALÜBERTRAGUNG IN AUFWÄRTSRICHTUNG IN EINEM FUNK-KOMMUNIKATIONSSYSTEM**
METHOD FOR SYNCHRONISING AN UPLINK SIGNAL TRANSMISSION IN A RADIO COMMUNICATION SYSTEM
PROCEDE DE SYNCHRONISATION D'UNE TRANSMISSION DE SIGNAL ASCENDENTE DANS UN SYSTEME DE COMMUNICATION RADIO

(30) Priorität: 01.11.1999 DE 19952261
(43) Veröffentlichungstag der Anmeldung: 31.07.2002
(73) Patentinhaber: SIEMENS AKTIENGESELLSCHAFT, 80333 München (DE)
(72) Erfinder: BAHRENBURG, Stefan, 28832 Achim (DE); FRANZ, Volker, 82178 Puchheim (DE); DE BENEDITTIS, Rosella, I-Mailand (IT)
(86) Internationale Anmeldenummer: DE0003836
(87) Internationale Veröffentlichungsnummer: WO01033731

(56) Entgegenhaltungen:
- DE-C- 19 840 232
- US-A- 5 825 835

## Beschreibung

Die Erfindung betrifft ein Verfahren zur Synchronisation einer Signalübertragung in Aufwärtsrichtung von zumindest einer Teilnehmerstation zu einer Basisstation eines Funk-Kommunikationssystems. Die Erfindung ist insbesondere für einen Einsatz in einem Mobilfunksystem geeignet.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Ein Vorschlag für ein Mobilfunksystem der dritten Generation nach "TD-SCDMA Radio Transmission Technology for IMT-2000", Draft V.0.4, der CATT vom September 1998, basiert auf dem beschriebenen TDD-Modus mit einer Unterstützung eines CDMA-Teilnehmerseparierungsverfahrens. Durch die Verwendung des CDMA-Teilnehmerseparierungsverfahrens können von mehreren Teilnehmerstationen in einem Zeitschlitz gesendete Übertragungsblöcke, die im allgemeinen aus einem Datenteil und einer bekannten Trainingssequenz bestehen, von einer Basisstation parallel verarbeitet werden. Hierzu muß jedoch sichergestellt werden, daß die Übertragungsblöcke und insbesondere die jeweiligen Trainingssequenzen innerhalb eines bestimmten Zeitfensters am Ort der Basisstation eintreffen, um eine gesicherte Detektion und Trennung der unterschiedlichen Signale zu gewährleisten. Dieses Problem der Synchronisation der Signalübertragung in Aufwärtsrichtung tritt bei bekannten CDMAbasierten Funk-Kommunikationssystemen in gleicher Weise auf.

Eine Synchronisation der jeweiligen Zeitbasis der Teilnehmerstationen erfolgt nach dem Stand der Technik, wie er beispielsweise bereits aus dem GSM-Mobilfunksystem bekannt ist, daher im allgemeinen bei einer Verbindungsaufbauprozedur, bei der die Basisstation nach einem Empfang eines Signals von einer Teilnehmerstation die Zeitreferenz der jeweiligen Teilnehmerstation durch eine Signalisierung eines Korrekturwertes einstellt. Da sich die Zeitreferenz beispielsweise aufgrund einer Bewegung der Teilnehmerstation laufend verändern kann, muß zur Einhaltung der zeitlichen Synchronität periodisch eine Korrektur der Zeitreferenz der Teilnehmerstation erfolgen.

Die bekannte Realisierung weist Nachteile hinsichtlich einer nicht vorhandenen Flexibilität der Anpassung an unterschiedliche Situationen, wie beispielsweise Größe der Funkzelle oder Bewegungsprofile der Teilnehmerstationen, auf, wodurch eine nicht optimale Funktionsweise erzielt wird.

Der Erfindung liegt die Aufgabe zugrunde, ein Verfahren anzugeben, das eine Flexibilisierung der Synchronisationsprozedur ermöglicht. Diese Aufgabe wird durch das Verfahren, die Basisstation, die Teilnehmerstation und das Funk-Kommunikationssystem gemäß den Merkmalen der unabhängigen Patentansprüche gelöst. Vorteilhafte Weiterbildungen der Erfindung sind den abhängigen Patentansprüchen zu entnehmen.

Erfindungsgemäß wird von einer Basisstation eines Funk-Kommunikationssystems ein Schrittweitenfaktor und/oder eine Periodizität einer in Abwärtsrichtung gesendeten Signalisierungsinformation zu einer Teilnehmerstation signalisiert. Die Signalisierungsinformation wird von der Teilnehmerstation, wie vorangehend beschrieben, für die zeitliche Steuerung der Signalübertragung in Aufwärtsrichtung zu der Basisstation verwendet.

Die erfindungsgemäße Ausgestaltung ermöglicht vorteilhaft, daß durch die Signalisierung von Parametern der Synchronisationsinformation eine individuell auf die jeweiligen Verhältnisse der Funkschnittstelle bzw. die Bewegungsprofile der Teilnehmerstationen abgestimmte zeitliche Synchronisation für die Signalübertragung in Aufwärtsrichtung durchführbar ist.

Nach zwei alternativen Weiterbildungen der Erfindung werden der Schrittweitenfaktor und/oder die Periodizität der Aussendung der Synchronisationsinformation in einem allgemeinen Signalisierungskanal oder in einem verbindungsindividuellen Signalisierungskanal zu der bzw. den Teilnehmerstationen signalisiert.

Die Aussendung der Parameter in einem allgemeinen Signalisierungskanal, wie beispielsweise dem BCH (Broadcast Channel), ist für eine funkzellenindividuelle Anpassung ausreichend. Die Anpassung kann hierbei beispielsweise abhängig von der Größe der Funkzelle oder von geographischen Besonderheiten der Funkzelle individuell für jede Funkzelle des Funk-Kommunikationssystems erfolgen. Der BCH wird dabei beispielsweise omnidirektional abgestrahlt, währenddessen die verbindungsindividuellen Funkkanäle gerichtet abgestrahlt werden.

Für eine zusätzliche Berücksichtigung des Bewegungsprofils einzelner Teilnehmer ist dahingehend eine Aussendung der Parameter in einem verbindungsindividuellen Signalisierungskanal, wie beispielsweise dem FACH (Forward Access Channel), der für eine Bestätigung eines Verbindungsaufbauwunsches von Teilnehmerstationen verwendet wird, vorteilhaft. So kann bei einer sich schnell bewegenden Teilnehmerstation beispielsweise die Periodizität und die Schrittweite erhöht werden, da sich die Übertragungsbedingungen ebenfalls schnell ändern. Bei einer quasi-stationäre Teilnehmerstation ist dahingegen eine niedrige Periodizität mit einer kleinen Schrittweite vorteilhaft, da sich die Bedingungen nur langsam ändern und eine Regelung mit einer großen Schrittweite zu einem nicht ausreichenden Synchronität führen würde.

Gemäß einer weiteren Ausgestaltung der Erfindung, wobei die Funkschnittstelle des Funk-Kommunikationssystems entsprechend einem TDD-Verfahren organisiert ist, wird die Synchronisationsinformation in einer der Periodizität entsprechenden Anzahl von Zeitrahmen wiederholt von der Basisstation gesendet. Hierdurch wird vorteilhaft eine robustere Detektion der Synchronisationsinformation sichergestellt, da diese Information in der Regel nur wenig oder garnicht fehlergeschützt ist. Durch die wiederholte Aussendung wird die Wahrscheinlichkeit einer fehlerhaften Detektion und einer dadurch bedingten fehlerhaften Synchronisation deutlich verringert.

Die alternative Aussendung der Synchronisationsinformation mit der Periodizität ermöglicht dahingehend vorteilhaft, daß die nicht für die Signalisierungsinformation genutzten Zeitrahmen für eine Übertragung von weiteren Daten oder Signalisierungen verwendet werden können und die begrenzten Ressourcen der Funkschnittstelle somit effizienter nutzbar sind.

Ausführungsbeispiele der Erfindung werden anhand der beiliegenden Zeichnungen näher erlautert.

Dabei zeigen
- FIG 1: ein Blockschaltbild eines Funk-Kommunikationssystems,
- FIG 2: eine schematische Darstellung der Rahmenstruktur einer Funkschnittstelle mit einem TD/CDMA-Teilnehmerseparierungsverfahren,
- FIG 3: eine Anordnung von Signalisierungskanälen in der Rahmenstruktur der Funkschnittstelle der FIG 2, und
- FIG 4: ein Ablaufdiagramm des erfindungsgemäßen Verfahrens.

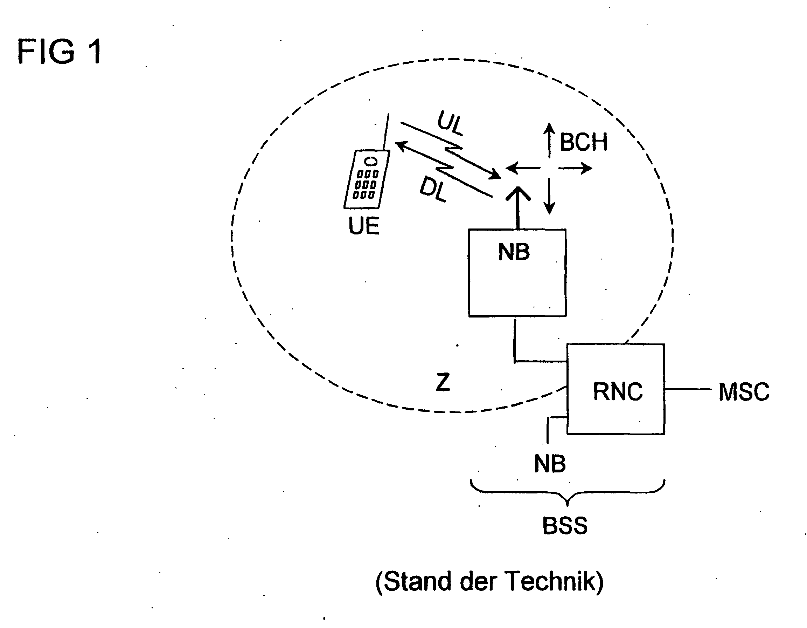

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen und unterhalten. Durch jede Basisstation NB wird zumindest eine Funkzelle Z gebildet. Die Größe der Funkzelle Z wird in der Regel durch die Reichweite eines allgemeinen Signalisierungskanals (BCH - Broadcast Channel), der von den Basisstationen NB mit einer konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Die Basisstationen NB des einleitend referenzierten TD-SCDMA-Mobilfunksystems weisen Antennen mit veränderbarer Richtcharakteristik auf, so daß nach einer Richtungsbestimmung für den Empfang und für bestimmte Aussendungen eine gezielte Ausrichtung der Richtcharakteristik auf eine Teilnehmerstation UE erfolgen kann. Der allgemeine Signalisierungskanal BCH wird omnidirektional gesendet und die ersten Zugriffe der Teilnehmerstationen UE in einem Kanal zum willkürlichem Zugriff RACH (Random Access Channel) werden ebenfalls omnidirektional empfangen. Die übrigen Aussendungen der Basisstation NB und der Empfang werden ansonsten richtungsselektiv durchgeführt. Dieses betrifft auch die dem erfolgreichen Erstzugriff folgenden Aussendungen in dem RACH und dem Bestätigungskanal FACH (Forward Access Channel).

Das Beispiel der FIG 1 zeigt eine Teilnehmerstation UE, die sich in der Funkzelle Z einer Basisstation NB befinden. Die Teilnehmerstation UE hat eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindung wird durch einen oder mehrere der Teilnehmerstation UE zugeteilte Spreizkodes von parallel in der Funkzelle Z aufgebauten Kommunikationsverbindungen separiert, wobei die Teilnehmerstation UE jeweils alle aktuell in der Funkzelle Z zugeteilten Spreizkodes für den Empfang der Signale der eigenen Kommunikationsverbindung gemäß dem bekannten Joint-Detection-Verfahren nutzt.

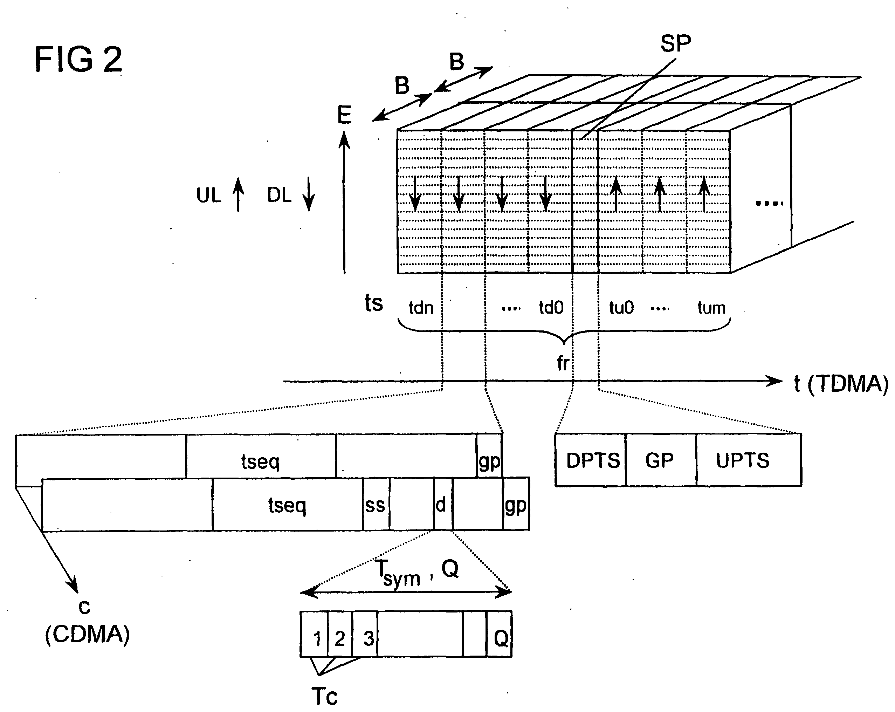

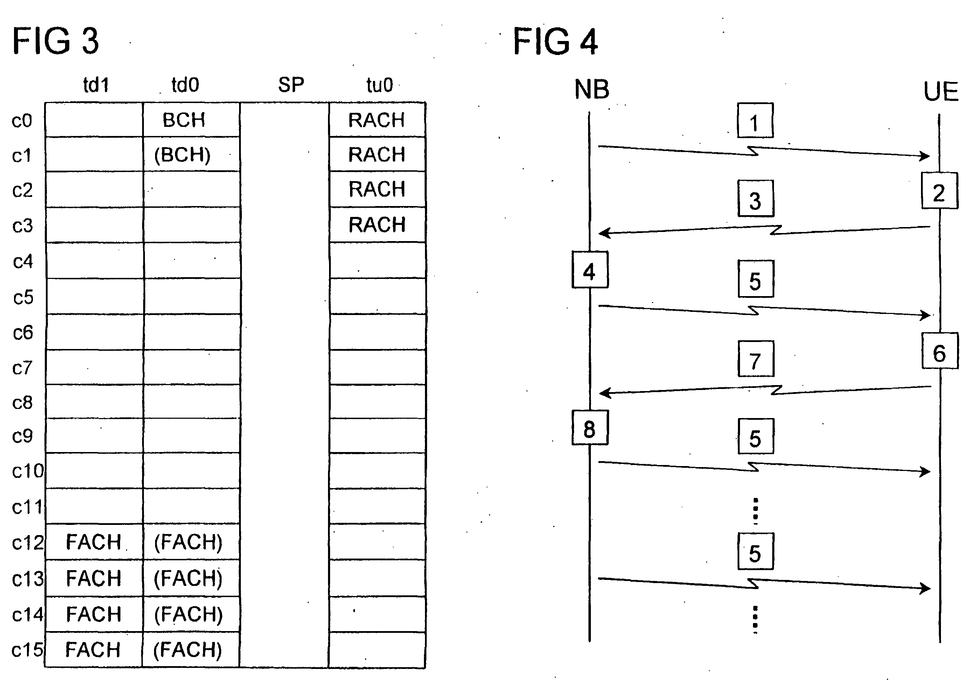

Die Rahmenstruktur der Funkübertragung des TD-SCDMA-Mobilfunksystems ist aus der FIG 2 ersichtlich. Die Funkschnittstelle ist als eine breitbandige Funkschnittstelle mit einem Frequenzband B = 1,6 MHz (somit drei Frequenzbänder pro 5 MHz), mit einer Zeitrahmendauer von 5 ms (somit zwei Zeitrahmen fr pro UTRA-Zeitrahmen), mit 7 Zeitschlitzen ts einer jeweiligen Länge von 675 us für Verkehrskanäle, sowie mit CDMA-Teilnehmerseparierung unter Nutzung von 16 unterschiedlichen Spreizkodes c0 bis c15 (Siehe FIG 3) ausgebildet.

Bei dem dargestellten TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für die Auf- oder Abwärtsrichtung UL, DL können vielfältige asymmetrische Ressourcenzuteilungen vorgenommen werden. Ein Teil der Zeitschlitze td0...tdn wird entsprechend für die Signalübertragung in Abwärtsrichtung DL (Downlink) und die übrigen Zeitschlitze tu0...tum für die Signalübertragung in Aufwärtsrichtung UL (Uplink). genutzt. Die Parameter n, m und somit der Umschaltpunkt SP (Switching Point) sind individuell an einen aktuellen Bedarf adaptierbar, wobei jeweils die Beziehung n+m+2=7 gilt. Im zeitlichen Anschluß an den ersten Zeitschlitz td0 für die Abwärtsrichtung DL folgt eine Schutzzeit zur Separierung der Übertragungsrichtungen DL und UL, die den Umschaltpunkt SP darstellt.

Die Schutzzeit besteht aus einem Abwärts-Pilotzeitschlitz DPTS (Downlink Pilot Time Slot) mit einer Länge von 75 us zum Senden von durch einen Satz sogenannter Gold-Codes unterschiedener Synchronisationssequenzen, aus einer Schutzzeit GP (Guard Period) mit einer Länge von 75 us für den Umschaltvorgang zwischen Senden und Empfangen in der Basisstation NB, sowie aus einem Aufwärts-Pilotzeitschlitz UPTS (Uplink Pilot Time Slot) mit einer Länge von 125 us zum Senden einer Synchronisationssequenz bei einem Verbindungsaufbauversuch durch eine Teilnehmerstation UE mit einer anschließenden Signalisierung auf dem Kanal zum wahlfreien Zugriff RACH. Zur Unterscheidung mehrerer Teilnehmerstationen UE bei dieser Zugriffsprozedur wird wiederum ein Satz. Gold-Codes verwendet.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente separierbar sind. Die Spreizung von einzelnen Symbolen der Daten d bewirkt, daß innerhalb der Symboldauer T_{sym} Q Chips der Dauer Tc übertragen werden. Die Q Chips bilden dabei den verbindungsindividuellen Spreizkode c. In den Funkblöcken ist weiterhin eine Kanalmeßsequenz tseq für eine empfangsseitige Kanalschätzung eingebettet. Unmittelbar nach der Kanalmeßsequenz tseq wird die erfindungsgemäße Sychronisationsinformation SS gesendet.
Diese Anordnung der Synchronisationsinformation SS innerhalb des Funkblocks besitzt den Vorteil, daß die darin enthaltenen Informationen mit einer größeren Sicherheit von der empfangenden Station detektiert werden können. Dieses ist bei der nur wenig oder garnicht fehlergeschützten Synchronisationsinformation SS von großer Bedeutung. Ein Funkblock wird jeweils mit einer Schutzzeit gp abgeschlossen.

Die verwendeten Parameter der Funkschnittstelle für das beschriebene TD-SCDMA-System sind vorteilhafterweise:

| | |
|---|---|
| Chiprate | 1,28 Mchip/s |
| Rahmendauer | 5 ms |
| Anzahl Zeitschlitze | 7 (Verkehrskanäle) |
| Dauer eines Zeitschlitzes | 675 µs |
| Spreizfaktor | 1 bis 16 |
| Bandbreite | 1,6 MHz |

Diese Parameter ermöglichen eine bestmögliche Harmonisierung mit dem UTRA TDD- und FDD-Modus (FDD frequency division duplex) sowie dem bekannten GSM-Mobilfunksystem.

In der FIG 3 sind vergrößert die Zeitschlitze td1 und td0 für die Abwärtsrichtung DL, der Umschaltpunkt SP sowie der erste Zeitschlitz tu0 für die Aufwärtsrichtung UL dargestellt. In den nach Spreizkodes c0...c15 unterschiedenen Übertragungskanälen, sogenannte Übertragungseinheiten (RU - Ressource Unit), werden mehrere Signalisierungskanäle übertragen, wobei die in Klammern angegebenen Signalisierungskanäle zusätzlich bei einem erhöhten Verkehrsaufkommen in den jeweiligen Übertragungskanälen zugewiesen werden können. In dem zweiten Zeitschlitz td1 für die Abwärtsrichtung sind dem Bestätigungskanal FACH im Normalfall bis zu vier Spreizkodes c12...c15 und bei hoher Belastung bis zu vier weitere Spreizkodes c12...c15 in dem ersten Zeitschlitz td0 für die Abwärtsrichtung DL zuweisbar. Der FACH dient zur Bestätigung einer Verbindungsaufbauanfrage in einem RACH durch Teilnehmerstationen UE, zur Aussendung von Synchronisationsinformationen SS für die Synchronisation der jeweiligen Teilnehmerstationen UE für die Signalübertragung in Aufwärtsrichtung UL, sowie zur Übertragung von kleinen Datenpaketen. Die Abstrahlung des FACH kann gemäß einer Richtcharakteristik erfolgen. Der Ort sowie die Anzahl der aktuell zugewiesenen FACH werden in dem allgemeinen Signalisierungskanal BCH angegeben.

Der allgemeine Signalisierungskanal BCH ist in dem ersten Zeitschlitz td0 für die Abwärtsrichtung DL angeordnet. In der Regel ist ihm der Spreizkode c0 zugewiesen, bei hoher Verkehrsbelastung ist jedoch zusätzlich der Spreizkode c1 dem BCH zuweisbar. Der BCH wird omnidirektional bzw. sektorbezogen und mit einer höherer Sendeleistung als der mittleren Sendeleistung gesendet.

In dem ersten Zeitschlitz tu0 für die Aufwärtsrichtung UL stehen dem Kanal zum willkürlichen Zugriff RACH vier durch die Spreizkodes c0...c3 unterschiedene Übertragungseinheiten zur Verfügung. Durch eine Unterscheidung mittels mehrerer Kodes können mehrere Zugriffe parallel in der Basisstation NB verarbeitet werden. Der Ort und die Anzahl der aktuell zugewiesenen RACH werden in dem allgemeinen Signalisierungskanal BCH angegeben.

In der FIG 4 ist ein Ablaufdiagramm einer Signalisierung zwischen einer Basisstation und einer Teilnehmerstation bei einer Unterstützung des erfindungsgemäßen Verfahrens zur Synchronisation dargestellt.

Von der Basisstation NB werden periodisch in dem allgemeinen Signalisierungskanal BCH Organisationsinformationen über das Mobilfunksystem in dem Funkversorgungsbereich der Basisstation NB gesendet (Schritt 1). Bei einem Einschalten der Teilnehmerstation UE ermittelt diese zunächst ein passendes Frequenzband und wählt anschließend anhand einer in dem Abwärts-Pilotzeitschlitz DPTS gesendeten stärksten Synchronisationssequenz eine geeignete Basisstation NB aus. Nach der Auswertung der Organisationsinformationen des BCH der ausgewählten Basisstation NB bestimmt die Teilnehmerstation UE anhand der Empfangsstärke des BCH eine korrespondierende Sendeleistung sowie anhand der Synchronisationssequenz einen Empfangszeitpunkt (Schritt 2) für ein nachfolgendes Senden einer Synchronisationssequenz in dem Aufwärts-Pilotzeitschlitz UPTS (Schritt 3), wobei sie einen geeigneten Gold-Code für die Synchronisationssequenz auswählt. Diese Prozedur wird als Synchronisation in Abwärtsrichtung (Downlink Synchronisation) bezeichnet.

Trotz des Empfangs der Synchronisationssequenz der Basisstation NB zur Synchronisation in Abwärtsrichtung ist die Entfernung der Teilnehmerstation UE zu der Basisstation NB weiterhin unbekannt, was nachteilig zu einer nicht synchronisierten Signalübertragung in Aufwärtsrichtung führt. Wenn nun die Basisstation NB die von der Teilnehmerstation UE in dem Aufwärts-Pilotzeitschlitz UPTS gesendete Synchronisationssequenz in einem bestimmten Empfangsfenster empfängt, ermittelt sie die Empfangsstärke sowie den Zeitversatz zu ihrer Zeitstruktur. Aus diesen ermittelten Parametern bestimmt die Basisstation NB den Inhalt der Synchronisationsinformation SS (Schritt 4), die sie nachfolgend in einem Bestätigungskanal FACH zu der Teilnehmerstation UE sendet (Schritt 5). Nach dem Empfang der Synchronisationsinformation SS in dem FACH steuert die Teilnehmerstation UE die Sendeleistung sowie den erforderlichen Zeitversatz für die Synchronisation der Signalübertragung in Aufwärtsrichtung (Schritt 6). Anschließend kann die Verbindungsprozedur fortgesetzt bzw. eine Datenübertragung in einem zugewiesenen Übertragungskanal erfolgen (Schritt 7).

Durch die Tatsache, daß die Kanalmeßsequenzen mehrerer aktiver Teilnehmerstationen in einem gleichen Zeitschlitz nur zeitversetzte Versionen einer Basismeßsequenz sind, ist die Basisstation NB in der Lage, die Kanalmeßsequenzen sequentiell zu detektieren. Entsprechend einer bestimmten Toleranz der Teilnehmerstationen für die Synchronisation der Signalübertragung in Aufwärtsrichtung kann die Basisstation NB hierdurch periodisch, beispielsweise auf Zeitrahmenbasis, eine jeweilige Synchronisationsinformation SS ermitteln (Schritt 8) und zu den Teilnehmerstationen UE in dem FACH senden (Schritt 5).

Die Synchronisationsinformation SS setzt sich beispielsweise aus Schicht 1-Signalisierungen Sendeleistung PC (Power Control) und Zeitversatz TA (Timing Advance) zusammen. Für den zeitbasierten Parameter wird beispielsweise ein fester Wert angenommen, d.h. die Steuerung des Zeitversatzes TA (Timing Advance) erfolgt mit einer festen Schrittweite. So wird der Zeitversatz beispielsweise auf einer Chip-Basis geregelt, d.h. bei jeder signalisierten Synchronisationsinformation SS wird die Zeitbasis für die Signalübertragung in Aufwärtsrichtung um ein Chip vorgezogen bzw. verzögert. Diese Regelung ist insbesondere bei sich schnell bewegenden Teilnehmerstationen UE nachteilig, da die Synchronisation nicht ausreichend schnell nachführbar ist.

Gemäß dem erfindungsgemäßen Verfahren wird diese Problematik durch eine zusätzliche Signalisierung eines Schrittweitenfaktors k und/oder einer Periodizität M, mit der die Übertragung der Synchronisationsinformation SS erfolgt, vorteilhaft gelöst. Der Schrittweitenfaktor k bestimmt dabei, mit welchem Teil einer Chipperiode Tc der Zeitversatz TA verändert wird. Dieses kann entsprechend der folgenden Tabelle erfolgen:

| Bitwert | dem Bitwert entsprechende Steuerung |
|---|---|
| 00 | erhöhe TA um (1/k)Tc |
| 01 | keine Änderung |
| 10 | keine Änderung |
| 11 | erniedrige TA um (1/k)Tc |

mit k(1...8).

Alternativ kann die Steuerung des Zeitversatzes TA nach der folgenden Tabelle erfolgen:

| Bitwert | dem Bitwert entsprechende Steuerung |
|---|---|
| 00 | erhöhe TA um (k/8)Tc |
| 01 | keine Änderung |
| 10 | keine Änderung |
| 11 | erniedrige TA um (k/8)Tc |

mit k(1...8).

Die Periodizität M gibt die Periode an, mit der die Synchronisationsinformation SS gesendet wird. Dabei kann die Synchronisationsinformation SS alternativ eine der Periodizität M entsprechende Anzahl wiederholt gesendet werden, wodurch vorteilhaft eine hohe Detektionssicherheit durch die Teilnehmerstation UE sichergestellt wird, da die Synchronisationsinformation SS in der Regel nicht fehlerschutzkodiert ist, oder die Synchronisationsinformation SS wird beispielsweise nur alle M Zeitrahmen gesendet, wodurch vorteilhaft Übertragungskapazität für weitere Signalisierungen oder zur Übertragung von kleinen Datenpaketen zur Verfügung steht.

Die Parameter Schrittweitenfaktor k und Periodizität M werden weiterhin alternativ in dem allgemeinen Signalisierungskanal BCH oder in dem Bestätigungskanal FACH signalisiert. Die Signalisierung in dem BCH besitzt dabei den Vorteil, daß die Parameter funkzellenindividuell eingestellt werden können, ohne daß eine große Belastung der Übertragungsressourcen auftritt. Dabei kann die Dimensionierung beispielsweise aufgrund des Typs der Funkzelle - Makrozelle, Mikrozelle -, aufgrund besonderer geograhischer Gegebenenheiten oder aufgrund besonderer Bewegungsprofile der Teilnehmerstationen eingestellt werden. So ist beispielsweise bei einer Funkzelle, die einen Abschnitt einer Autobahn mit funktechnischen Ressourcen versorgt, aufgrund der hohen Geschwindigkeiten der Teilnehmerstationen ein großer Schrittweitenfaktor k und Periodizität M sinnvoll, währenddessen bei einer Funkzelle, die eine Fußgängerzone versorgt, aufgrund der nur geringen Geschwindigkeit der Teilnehmerstationen ein kleiner Schrittweitenfaktor k und Periodizität M ausreichend. Eine adaptive Einstellung der Parameter abhängig von Veränderungen der Profile ist ebenfalls denkbar. So kann bei dem Beispiel des versorgten Autobahnabschnitts bei einem Stau eine Dimensionierung der Parameter entsprechend dem Beispiel der versorgten Fußgängerzone erfolgen.

Eine Signalisierung der Parameter k und M in dem Bestätigungskanal FACH ist dahingehend in Funkzellen, die ein breites Band an Bewegungsprofilen der darin befindlichen Teilnehmerstationen aufweisen, sinnvoll. In diesem Fall können die Parameter verbindungsindividuell dimensioniert werden, um einerseits eine ausreichende Synchronisation der Signalübertragung in Aufwärtsrichtung zu gewährleisten, andererseits jedoch die Signalisierungslast in dem Signalisierungskanal FACH möglichst gering zu halten. Die verbindungsindividuelle Signalisierung in dem FACH kann vorteilhaft nicht nur abhängig von Bewegungsprofilen der Teilnehmerstationen sondern beispielsweise auch abhängig von in Kommunikationsverbindungen übertragenen Diensten eingesetzt werden, da beispielsweise bei Echtzeitdiensten mit einer hohen Datenrate eine genauere Synchronisation als bei Nichtechtzeitdiensten gefordert wird. Hierbei kann die Basisstation bereits bei einer Verbindungsanfrage durch eine Teilnehmerstation abhängig von dem zu übertragenen Dienst geeignete Parameter k, M auswählen und zu der jeweiligen Teilnehmerstation signalisieren.

Die Signalisierung der Parameter k, M kann alternativ auch in der Weise erfolgen, daß in dem allgemeinen Signalisierungskanal BCH für die jeweilige Funkzelle der Basisstation ausgewählte Grundparameter gesendet werden, die von Teilnehmerstationen mit einem normalen Bewegungsprofil für die Synchronisation der Signalübertragung in Aufwärtsrichtung verwendet werden. Teilnehmerstationen mit einem speziellen Bewegungsprofil, wie beispielsweise einer hohen Geschwindigkeit, können in dem Bestätigungskanal FACH von den Grundparamtern abweichende spezielle Parameter k, M signalisiert werden, die nachfolgend von den Teilnehmerstationen für die Synchronisation in Aufwärtsrichtung anstelle der Grundparameter berücksichtigt werden. Hierdurch wird auch für diese Teilnehmerstationen eine konstant gute Synchronisation sichergestellt, ohne daß eine hohe Signalisierungslast in dem Bestätigungskanal FACH auftritt. Die zusätzliche Nutzung des Bestätigungskanals FACH kann dabei auch zeitlich beschränkt erfolgen, beispielsweise nur solange, wie das Bewegungsprofil der jeweiligen Teilnehmerstation UE außerhalb eines bestimmten normalen Bewegungsprofils liegt.

## Patentansprüche

1. Verfahren zur Synchronisation einer Signalübertragung in Aufwärtsrichtung (UL) von zumindest einer Teilnehmerstation (UE) zu einer Basisstation (NB) eines Funk-Kommunikationssystem,
**dadurch gekennzeichnet, daß**
von der Basisstation (NB) ein Schrittweitenfaktor (k) und/oder eine Periodizität (M) einer in Abwärtsrichtung (DL) gesendeten Synchronisationsinformation (SS) zu der Teilnehmerstation (UE) signalisiert wird, und von der Teilnehmerstation (UE) mittels der Synchronisaticnsinformation (SS) die Signalübertragung in Aufwärtsrichtung (UL) zu der Basisstation (NB) gesteuert wird.

2. Verfahren nach Anspruch 1,
**dadurch gekennzeichnet, daß**
der Schrittweitenfaktor (k) und/oder die Periodizität (M) abhängig von Übertragungsverhältnissen der Funkschnittstelle zwischen der Basisstation (NB) und der Teilnehmerstation (UE) bestimmt wird.

3. Verfahren nach Anspruch 1 oder 2,
**dadurch gekennzeichnet, daß**
der Schrittweitenfaktor (k) und/oder die Periodizität (M) der Aussendung der Synchronisationsinformation (SS) in einem allgemeinen Signalisierungskanal (BCH) von der Basisstation (NB) zu der Teilnehmerstation (UE) signalisiert wird.

4. Verfahren nach Anspruch 1 oder 2,
**dadurch gekennzeichnet, daß**
der Schrittweitenfaktor (k) und/oder die Periodizität (M) der Aussendung der Synchronisationsinformation (SS) in einem verbindungsindividuellen Signalisierungskanal (FACH) von der Basisstation (NB) zu der Teilnehmerstation (UE) signalisiert wird.

5. Verfahren nach einem vorhergehenden Anspruch,
**dadurch gekennzeichnet, daß**
die Synchronisationsinformation (SS) vor oder nach einer Trainingssequenz (tseq) eines Funkblocks übertragen wird.

6. Verfahren nach einem vorhergehenden Anspruch,
**dadurch gekennzeichnet, daß**
in dem Funk-Kommunikationssystem die Signalübertragung gemäß einem CDMA-Teilnehmerseparierungsverfahren durchgeführt wird.

7. Verfahren nach einem vorhergehenden Anspruch,
**dadurch gekennzeichnet, daß**
die Funkschnittstelle des Funk-Kommunikationssystems gemäß einem TDD-Verfahren organisiert ist.

8. Verfahren nach dem vorhergehenden Anspruch,
**dadurch gekennzeichnet, daß**
die Synchronisierungsinformation (SS) wiederholt innerhalb einer der Periodizität (M) entsprechenden Anzahl von Zeitrahmen (fr) gesendet wird.

9. Basisstation (NB) eines Funk-Kommunikationssystems,
**gekennzeichnet durch**
Mittel zum Signalisieren eines Schrittweitenfaktors (k) zu und/oder einer Periodizität einer in Abwärtsrichtung (DL) zu einer Teilnehmerstation (UE) gesendeten Synchronisationsinformation (SS).

10. Funk-Kommunikationssystems mit zumindest einer Teilnehmerstation (UE) und zumindest einer Basisstation (NB),
**dadurch gekennzeichnet, daß**
die Basisstation (NB) Mittel zum Signalisieren eines Schrittweitenfaktors (k) und/oder einer Periodizität einer in Abwärtsrichtung (DL) zu einer Teilnehmerstation (UE) gesendeten Synchronisationsinformation (SS), und
die Teilnehmerstation (UE) Mittel zum Steuern der Signalübertragung in Aufwärtsrichtung (UL) zu der Basisstation (NB) in Abhängigkeit von der empfangenen Synchronisationsinformation (SS)
aufweisen.

11. Funk-Kommunikationssystem nach dem vorhergehenden Anspruch, wobei es als ein Mobilfunksystem verwirklicht ist.

## Claims

1. Method for synchronization of signal transmission in the uplink direction (UL) from at least one subscriber station (UE) to a base station (NB) in a radio communications system,
**characterized in that**
the base station (NB) signals a step width factor (k) and/or a periodicity (M) of synchronization information (SS), which is transmitted in the downlink direction (DL), to the subscriber station (UE), and the subscriber station (UE) uses the synchronization information (SS) to control the signal transmission in the uplink direction (UL) to the base station (NB).

2. Method according to Claim 1,
**characterized in that**
the step width factor (k) and/or the periodicity (M) are determined as a function of the transmission conditions on the radio interface between the base station (NB) and the subscriber station (UE).

3. Method according to Claim 1 or 2,
**characterized in that**
the step width factor (k) and/or the periodicity (M) of the transmission of the synchronization information (SS) is signalled using a general signalling channel (BCH) from the base station (NB) to the subscriber station (UE).

4. Method according to Claim 1 or 2,
**characterized in that**
the step width factor (k) and/or the periodicity (M) of the transmission of the synchronization information (SS) is signalled in a connection-specific signalling channel (FACH) from the base station (NB) to the subscriber station (UE).

5. Method according to one preceding claim,
**characterized in that**
the synchronization information (SS) is transmitted before or after a training sequence (tseq) in a radio block.

6. Method according to one preceding claim.
**characterized in that**
the signal transmission in the radio communications system is carried out in accordance with a CDMA subscriber separation method.

7. Method according to one preceding claim,
**characterized in that**
the radio interface in the radio communications system is organized in accordance with a TDD method.

8. Method according to the preceding claim,
**characterized in that**
the synchronization information (SS) is transmitted repeatedly within a number of time frames (fr) corresponding to the periodicity (M).

9. Base station (NB) in a radio communications system
**characterized by**
means for signalling a step width factor (k) and/or a periodicity of synchronization information (SS) which is transmitted in the downlink direction (DL) to a subscriber station (UE).

10. Radio communications system having at least one subscriber station (UE) and at least one base station (NB),
**characterized in that**
the base station (NB) has means for signalling a step width factor (k) and/or a periodicity of synchronization information (SS) which is transmitted. in the downlink direction (DL) to a subscriber station (UE), and
the subscriber station (UE) has means for controlling the signal transmission in the uplink direction (UL) to the base station (NB) as a function of the received synchronization information (SS).

11. Radio communications system according to the preceding claim, with this radio communications system being in the form of a mobile radio system.

## Revendications

1. Procédé destiné à la synchronisation d'une transmission de signaux dans le sens ascendant (UL) entre au moins un poste d'abonné (UE) et une station de base (NB) d'un système de communication par radio
**caractérisé par le fait**
**qu'**un facteur (k) de pas de progression et/ou une périodicité (M) d'une information de synchronisation (SS) envoyée dans le sens descendant (DL) sont envoyés par signalisation, par la station de base (NB), au poste d'abonné (UE) et que le poste d'abonné (UE) règle, au moyen de l'information de synchronisation (SS), la transmission des signaux dans le sens ascendant (UL) vers la station de base (NB).

2. Procédé selon la revendication 1
**caractérisé par le fait**
**que** le facteur (k) de pas de progression et/ou la périodicité (M) sont déterminés en fonction de conditions de transmission de l'interface radio entre la station de base (NB) et le poste d'abonné (UE).

3. Procédé selon la revendication 1 ou 2
**caractérisé par le fait**
**que** le facteur (k) de pas de progression et/ou la périodicité (M) de l'émission de l'information de synchronisation (SS) sont envoyés par signalisation dans un canal de signalisation générale (BCH) de la station de base (NB) vers le poste d'abonné (UE).

4. Procédé selon la revendication 1 ou 2
**caractérisé par le fait**
**que** le facteur (k) de pas de progression et/ou la périodicité (M) de l'émission de l'information de synchronisation (SS) sont envoyés par signalisation dans un canal de signalisation individuelle à la liaison (FACH) de la station de base (NB) vers le poste d'abonné (UE).

5. Procédé selon l'une des revendications précédentes
**caractérisé par le fait**
**que** l'information de synchronisation (SS) est transmise avant ou après une séquence d'apprentissage (tseq) d'un bloc radio.

6. Procédé selon l'une des revendications précédentes
**caractérisé par le fait**
**que**, dans le système de communication par radio, la transmission des signaux a lieu selon un procédé de séparation des abonnés AMDC (ou, en anglais, CDMA).

7. Procédé selon l'une des revendications précédentes
**caractérisé par le fait**
**que** l'interface radio du système de communication par radio est organisée selon un procédé DPT (ou, en anglais, TDD).

8. Procédé selon l'une des revendications précédentes
**caractérisé par le fait**
**que** l'information de synchronisation (SS) est envoyée d'une façon répétitive à l'intérieur d'un nombre de trames temporelles (fr) correspondant à la périodicité (M).

9. Station de base (NB) d'un système de communication par radio
**caractérisée par**
des moyens destinés à la transmission par signalisation d'un facteur (k) de pas de progression et/ou d'une périodicité d'une information de synchronisation (SS) envoyée dans le sens descendant (DL) vers un poste d'abonné (UE).

10. Système de communication par radio avec au moins un poste d'abonné (UE) et au moins une station de base (NB)
**caractérisé par le fait**
**que** la station de base (NB) comporte des moyens destinés à la transmission par signalisation d'un facteur (k) de pas de progression et/ou d'une périodicité d'une information de synchronisation (SS) envoyée dans le sens descendant (DL) vers un poste d'abonné (UE) et
**que** le poste d'abonné (UE) comporte des moyens destinés à la commande de la transmission des signaux dans le sens ascendant (UL) vers la station de base (NB) en fonction de l'information de synchronisation (SS) reçue.

11. Système de communication par radio selon la revendication précédente, réalisé en tant que système de radio mobile.
